# EUROPEAN PATENT SPECIFICATION

(11) **EP 3 073 152 B1**
(45) Date of publication and mention of the grant of the patent: **22.09.2021**
(21) Application number: 15160449.3
(22) Date of filing: 24.03.2015
(51) Int. Cl.: F16H 25/20, F16H 25/22, F16D 65/18, F16D 28/00, F16D 125/40, F16H 57/12, F16D 121/24, F16D 23/12

(54) **PRELOADED LINEAR ACTUATOR SYSTEM AND A METHOD FOR CONTROLLING A SUCH**
LINEARAKTUATOR MIT VORSPANNUNG UND VERFAHREN ZUR STEUERUNG EINES SOLCHEN AKTUATORS
ACTIONNEUR LINÉAIRE AVEC PRECHARGE ET PROCÉDÉ DE CONTRÔLE DUDIT ACTIONNEUR

(43) Date of publication of application: 28.09.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Németh, Huba, 1116 Budapest (HU); Szucs, Gábor, 8088 Tabajd (HU)

(56) References cited:
- DE-A1-102007 046 953
- JP-A- S6 464 747
- US-A- 4 487 087
- US-A1- 2013 249 464
- None

## Description

The present invention relates to a linear actuator system and a method for a vehicle with an electric motor, a clutch or a vehicle brake system, wherein the linear actuator system is able to provide a linear actuation force, and, in particular, to a ball screw bearing for an electro-mechanic linear actuator gear.

### Background

Linear actuators play an important role in commercial vehicles for actuating, for example, a clutch or a brake. In many conventional systems, the clutches and brakes are operated by means of hydraulic or pneumatic systems using a plunger and several valves to move the plunger forward and backward. In such systems it is, however, difficult to control the linear actuation with a high precision. Therefore, there is a need to replace such actuators by alternative systems based, for example, on electro-mechanical actuators that provide an improved control over the actuation force and the actuation position. There is a particular demand for using electric motors for linear actuators as for example in clutch and brake systems.

When using electric motors, the provided rotational torque has to be transformed into the linear actuator force to operate the exemplary clutch or brake system. One possible way to provide such transformation is based on the so-called ball-screw principle. This principle is not yet widely used in the field and there is a desire to use it in mass production of vehicle actuators in an optimized way, while meeting the demands of high efficiency and low costs in the production. In particular, when employing this principle in heavy-duty vehicles, a mechanical load over a significant high stroke (linear translation) shall be provided reliably and shall not result in increased maintenance costs.

Some conventional systems based on this principle are available. For example, US 888,619 discloses a ball screw mechanism with an outer thread in the screw and a parallel inner thread in a nut, wherein the balls are kept in contact with each other. The balls roll out from the nut and are guided back by a particular channel. However, the production of this nut is more expensive (the additional channel has to be provided) and the transport of the balls is prone to malfunctions and thus the costs are further increased. A similar system for a vehicle brake actuator is disclosed in DE 10 2008 032 819, wherein the thread of the nut is filled by a chain of balls limiting, however, the stroke for the actuator element.

GB 130,529 discloses another ball screw mechanism with circumferential inner ball guiding grooves in the nut element and multiple start screws in connection with the balls. Although this system simplifies the ball mechanism by guiding the balls in the circumferential groove in the nut, the number of balls is dramatically decreased resulting in an unbalanced load transfer to the screw. On the other hand, if the number of threads, where the balls can start moving, will be increased, this has a significant effect on the thread pitch and a balanced load transfer is still not yet ensured, because the balls may change their relative angular positions. US 2,739,491 discloses a similar ball screw mechanism, in which the relative angular positions of the balls are fixed by a cage element allowing a planetary operation and ensuring a balanced load transfer.

US 3,489,055 discloses yet another ball screw mechanism having an intermediate rotating element within the nut, which is connected to the screw thread by additional balls around a circumferential circle. The connection to the nut is made by a separate ball row. Hence, this system is more complex and more expensive. Finally, GB 693,837 discloses a power steering ball-spindle gear mechanism, wherein three balls couple to the housing such that they cannot move axially. Also this system comprises a hollow shaft element inserted between the screw and ball guiding with holes for the balls to keep the balls in a defined angular position to each other. This hollow shaft element is the ball cage and is used to apply a rotational movement on the balls.

US 2013/249464 discloses another conventional actuator assembly with preloaded ball screws, which includes a motor with a transmission mechanism and a drive shaft operatively coupled to the transmission mechanism.

All conventional systems are not yet optimal for the above mentioned applications. Therefore, there is a demand for an improved linear actuating system based on the ball-spindle solution which is simple to produce while providing a reliable solution even for applications in heavy-duty vehicles.

### Summary of the Invention

The present invention solves the afore-mentioned problems by providing a linear actuator system according to claim 1 or claim 2, a vehicle according to claims 10 or 11, and a method according to claim 12. The dependent claims refer to specifically advantageous realizations of the subject matters of the independent claims.

The term rod shall be construed in a very general way and may refer to any rod-like element, which may also be part of a larger compound as long as it is suitable for the defined function. Similarly, the term "ring" shall refer to any kind of ring-like element, which is suitable for the defined function. In particular, the ring may also be part of a larger or more complex component and may, in particular, be connected or coupled to any other components. The preload force may in particular be constant, which means that the force does not modify or change in idle periods between two successive actuation processes to provide the desired function that the linear actuator system responds within a short response time to any actuation initiated via the control unit. The force may be unidirectional, i.e. it may act always in the same direction, during actuations and idle periods. Therefore, the balls are always clamped between the rod and the ring.

In further embodiments the at least one circumferential groove comprises a first circumferential groove and a second circumferential groove, wherein the plurality of balls comprises a first plurality of balls engaged with a first circumferential groove and a second plurality of balls engaged with a second groove (while engaging the threads), the first circumferential groove being longitudinally displaced with respect to the second circumferential groove.

In yet another embodiment, the linear actuator system further comprises a cage arranged between the rod and the ring, or arranged between the rod and the cylindrical tube, the cage comprises openings configured to receive the pluralities of balls and to hold the plurality of balls at predetermined angular distances from each other.

The cage may, for example, be a cylindrical, tube-like object which is suitable for retaining the plurality of balls in the predetermined angular distance from each other. However, in further embodiments it may also be possible that a cage is formed as a grid-like structure which can be arranged between the ring and the rod while keeping the plurality of balls in the desired positions.

In yet another embodiment, for each circumferential groove and in each thread of the threads one respective ball is disposed.

In yet another embodiment, the gear transmission may comprise at least one of the following: a spur gear, a helical gear, a planetary gear, a cycloid gear, harmonic drive gear, teeth-belt or chain gear wheel or any combination thereof.

In yet another embodiment, the rotational torque of the electric motor may be directly provided to the rod or to the ring or to the cylindrical tube.

In yet another embodiment, the linear actuator system may further comprise a coupling element configured to supply the linear motion to a clutch of a vehicle drive line or to a vehicle brake system or to a control valve of the vehicle for controlling a fluid flow.

In yet another embodiment, the linear actuator system may further comprise a sensor being configured to measure a longitudinal actuation of the linear actuator, the sensor being configured to provide a sensor signal indicative of the longitudinal position or the longitudinal force provided by the linear actuator and to provide the sensor signal to the control unit. The control unit may be configured to adjust the control of the electric motor based on the control signal.

The present invention relates also a vehicle comprising: an electric motor; one of the above linear actuator systems; and a clutch being coupled to the linear actuator system and being driven by a linear actuation force provided by the linear actuator system.

The present invention relates also a vehicle comprising: an electric motor; a vehicle brake system; and one of the linear actuator systems described above, which is coupled to the vehicle brake system to provide an actuation the vehicle brake.

The present invention relates also a method for controlling a linear actuator according to claim 12.

This method may also be implemented at least in part in software or a computer program product and the order of steps is not important to achieve the desired effect. In addition, all functions described previously in conjunction with the systems may be realized as further method steps and be implemented in software or software modules.

### Brief Description of the Drawings

Various embodiments of the present invention will be described in the following by way of examples only, and with respect to the accompanying drawings, in which:
- Fig. 1: depicts a linear actuator system according to an embodiment of the present invention.
- Fig. 2: depicts a linear actuator system according to another embodiment of the present invention.
- Fig. 3: illustrates further details of the embodiment of Fig. 1.
- Fig. 4: illustrates the operation of the linear actuator system when coupled to an electric motor.
- Fig. 5: depicts another linear actuator system according to another embodiment.
- Fig. 6a, b: depict the linear actuator systems with an optional gearing system.
- Fig. 7a, b: depict further embodiments with a positional sensor.
- Fig. 8: shows a flow diagram of a method according to the present invention.

### Detailed Description

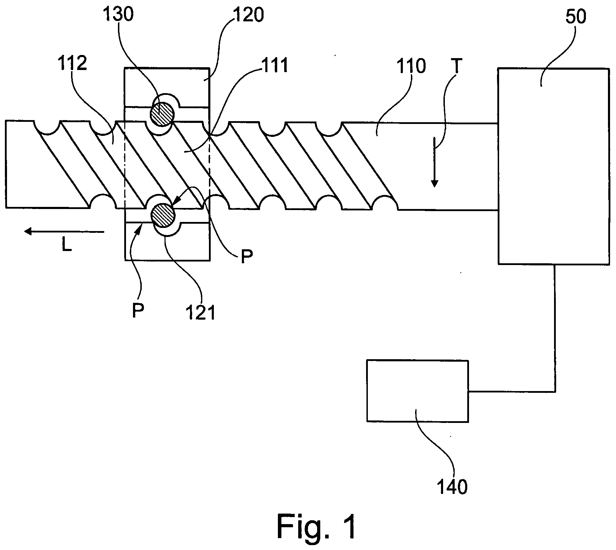

Fig. 1 depicts a linear actuator 100 according to one embodiment of the present invention. The system 100 comprises: a rod 110 with threads 111, a ring 120 with at least one circumferential groove 121 facing the threads of the rod, the ring 120 and the rod 110 being configured to perform a relative rotation to each other, wherein one of the ring 120 and the rod 110 is configured to couple to the electric motor 50 such that the electric motor 50 is able to drive the relative rotation. The system 100 further comprises a plurality of balls 130 arranged between the ring and the rod to roll along the circumferential groove 121 and the threads 111 to move the other one of the ring 120 and the rod 110 in a longitudinally direction in response to the relative rotation. The system 100 further comprises a control unit 140 configured to control the electric motor 50 to provide a constant preload force (or torque T) acting between the rod 110 and the ring 120 without moving the other one of the ring 120 and the rod 110 in the longitudinally direction.

According to the present invention, as long as no force is applied on the rod 110 or the ring 120 the balls 130 are not fixed in its position along the threads or groove, but may freely roll (as long as they still engage the threads/groove). In particular, the balls are not necessarily retained at predetermined positions by a cage or similar holding elements. However, the ring 120 can move longitudinally only if the balls 130 move in the longitudinal direction and the balls will change their longitudinal position only if they move along the threads 111, 112. Therefore, if for some reasons the balls are stuck at a particular position on the screw (the rod 110), the ring 120 will not move longitudinally even if the rod 110 is rotating. Therefore, according to the present invention, the balls 130 will be subject to a friction or a pretension between the balls 130 and the ring 120 as well as between the balls 130 and the rod 110 (i.e. the balls may permanently be clamped between the ring 120 and the rod 110). This pretension is provided by the electromotor 50 as controlled by the control unit 140 during operation and during idle periods (when the ring does not move longitudinal).

Therefore, according to the present invention, the control unit 140 is configured to control the electric motor 50 in a way that the balls 130 are always in contact to the rod 110 and to the ring 120, thereby ensuring that a rotation of the rod 120 will immediately result in an axial force L on the ring 120 and thus ensuring the correct operation of the linear actuator system 100. These two contact points, where the (unidirectional) preload force acts are indicated in Fig. 1 by the points P.

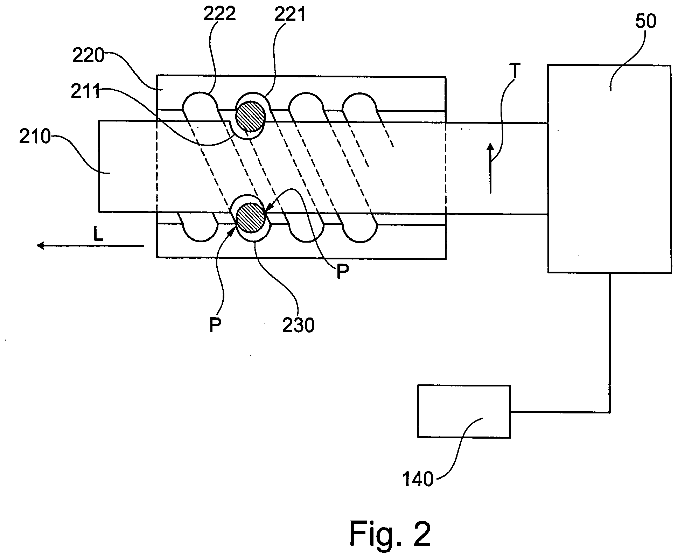

Fig. 2 depicts another embodiment for a linear actuator system 200 for providing a linear actuator force transferred from an electric motor 50. This system 200 comprises: a rod 210 with at least one circumferential groove 211 and a cylindrical tube 220 with threads 221 facing the at least one circumferential groove 211 of the rod 210, the cylindrical tube 220 and the rod 210 being configured to perform a relative rotation to each other, wherein one of the cylindrical tube 220 and the rod 210 is configured to couple to the electric motor 50 such that the electric motor 50 is able to drive the relative rotation. The system further comprises a plurality of balls 230 arranged between the cylindrical tube 220 and the rod 210 to roll along the circumferential groove 211 and the threads 221 to move the other one of the cylindrical tube 220 and the rod 210 in a longitudinally direction in response to the relative rotation. The system further comprises a control unit 140 configured to control the electric motor 50 to provide a constant preload force (or torque T) acting between the rod 210 and the cylindrical tube 220 without moving the other one of the cylindrical tube 220 and the rod 210 in the longitudinally direction.

Similar to the embodiment of Fig. 1, if the control unit 140 would not provide a preload force between the rod 210 and the cylindrical tube 220, the balls 230 could, in principle, stay at a particular position within the thread 221 without any contact to the groove 211 of the rod 210 and thus would not move along threads 211 and would not impose a linear force on the cylindrical tube 220. Such operation would be against the linear actuator system and should be prevented. The simplest way of preventing this idle mode is to provide a (unidirectional) preload or pretension between the rod 210 and the cylindrical tube 220. As a consequence of this preload, a rotation of the rod 210 would immediately imply a rotation of the balls 230 being pressed or clamped between the cylindrical tube 220 and the groove 211 of the rod 210 as it is visible in Fig. 2. Again, the contact points P are a result of this permanent preload force.

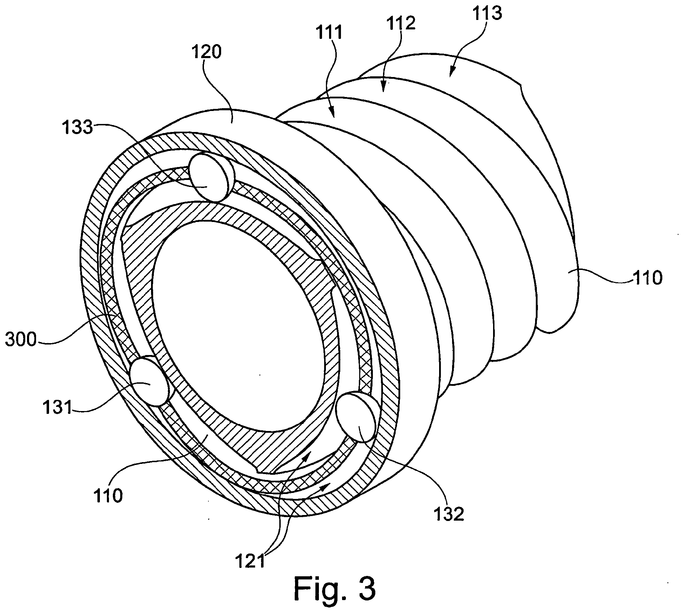

Fig. 3 shows a cross-sectional view through the rod 110 and the ring 120 perpendicular to the axial direction of the rod 110 for the embodiment of Fig. 1. It is noted, the same details can also be implemented in the embodiment of Fig. 2 they are described only for simplicity in conjunction with the embodiment of Fig. 1.

In the embodiment shown in Fig. 3, the rod 110 comprises three threads: a first thread 111, a second thread 112 and a third thread 113. As a consequence, in the cross-sectional view, the rod 110 provides three open spaces to accommodate a first ball 131, a second ball 132 and a third ball 133, wherein in the first ball 131 rolls along the first thread 111, the second ball 132 rolls along the second thread 112, and the third ball 133 rolls along the third thread 113. The exemplary threads are distinct threads not being connected with each other. In addition, the cross-sectional view through the rod 110 and the ring 120 extends along the groove 121 arranged within the ring 120, along which the first to third balls 131 to 133 can roll.

In this embodiment, the linear actuator system 100 comprises an optional cage 300 arranged between the ring 120 and the rod 110. The cage 300 comprises a cylindrical shape with openings for each ball 130 such that the plurality of balls are fixed by the cage 300 at predetermined angular positions relative to each other (not necessarily their absolute angular positions). For example, the cage 300 in the embodiment of Fig. 3 may comprise three openings: one for the first ball 131, one for the second ball 132 and one for the third ball 133 fixing their angular position at equidistant angular distances from each other. As a result, the cage 300 can ensure that the linear force L provided by the ring 120 as consequence of the rotation of the rod 110 will be transferred to the ring 120 uniformly, thereby avoiding any tilting of the ring 120 in comparison to the rod 110. Hence, the ring 120 can move easily along the longitudinal direction upon a rotation of the rod 110.

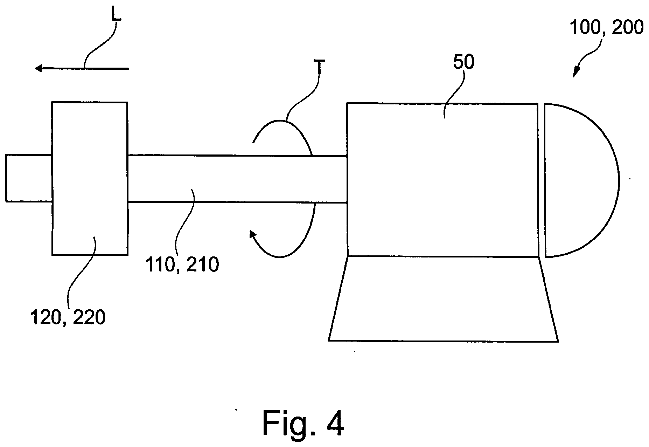

Fig. 4 depicts the linear actuator systems 100, 200, as for example shown in Figs. 1 and 2 (the threads and circumferential grooves are not shown in this Fig.), together with the electric motor 50. The electric motor 50 provides a torque T acting on the rod 110, 210. This torque T is transformed into a linear force L provided by the tubular ring 120 as a consequence of the rolling balls (not shown in Fig. 4) within the tubular ring (e.g. the ring 120 or cylindrical tube 220). The transformation may be achieved by rotationally fixing the tubular ring 120, 220, for example in comparison to the motor 50 or a housing (not shown in Fig. 4).

In addition, Fig. 4 also does not show any connection of the tubular ring 120, 220 with the exemplary clutch or brake system or any other system to which the linear actuation force may be provided by the linear actuator systems 100, 200. Therefore, the tubular ring 120, 220 in Fig. 4 is shown only in a simplified way, but may actually be part of a other more complex component or may be connected to such component.

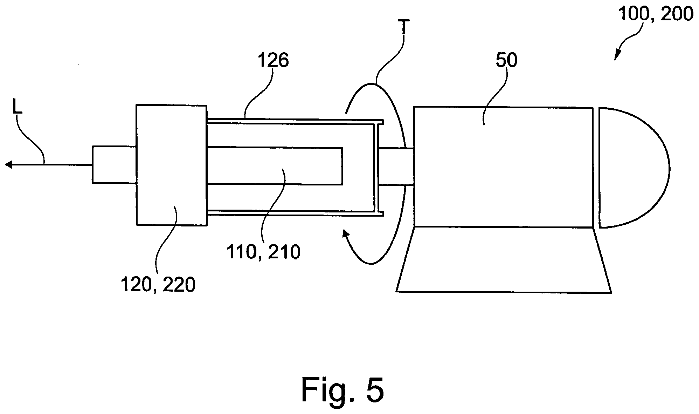

Fig. 5 shows an embodiment, wherein the linear force L is not provided by the tubular ring 120, 220 but by the rod 110, 210. In this embodiment the motor 50 provides again the torque T, for example, to a cylindrical portion 126 coupled to the tubular ring 120, 220. As consequence, the tubular ring 120, 220 rotates upon actuation of the electric motor 50. If the rod 110, 210 is rotationally fixed, for example in comparison to the motor 50 or a housing (not shown in Fig. 5), the rod 110, 210 will move forward along the direction of the linear force L. Again, balls are provided between the rod 110, 210 and the tubular ring 120 (not shown in Fig. 5). Therefore, the only difference compared to the previous embodiments is that the tubular ring 120, 220 comprises the cylindrically portion 126 connecting or coupling the tubular ring 120, 220 to the electric motor 50 and that the rod 110, 210 is not connected to the motor 50. The threads and the circumferential groove in the tubular ring and at the rod can be arranged in the same way as disclosed and described previously with Fig. 1 or Fig. 2.

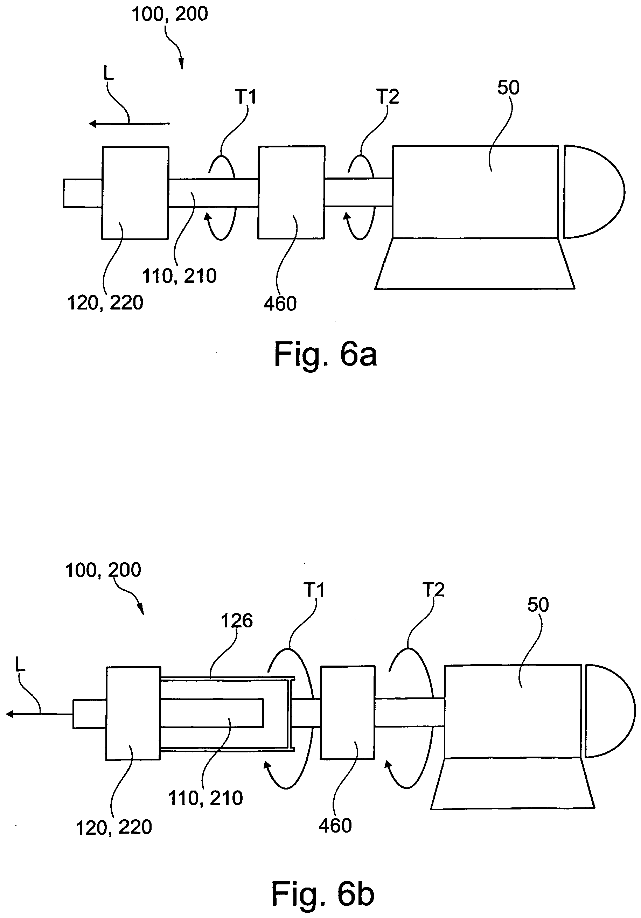

Figs. 6a, b show further embodiments for the linear actuator systems 100, 200 which comprise a gear unit 460 coupled to the electric motor 50.

In Fig. 6a the gear unit 460 is interposed between the electric motor 50 and the rod 110, 210. In Fig. 6b the gear unit 460 is interposed between the cylindrical portion 126 coupled to the tubular ring 120, 220 (see Fig. 5) and the electric motor 50.

The gear unit 460 may, for example, provide a gearing such that a rotational speed or torque T2 provided by the electric motor 50 is transformed into a lower or a higher rotational speed or torque T1 of the rod 110, 210 or the tubular ring 120, 220. Therefore, the rotational speed of the rod 110, 210 and the resulting longitudinal movement of the tubular ring 120, 230 can be optimized and adjusted to an optimal operation of the electric motor 50 or the exemplary clutch of brake system. The gear unit 460 may comprise any kind of gear as for example a teeth belt, a planetary gear system or any other gearing suitable for transforming a first rotational speed into another rotational speed.

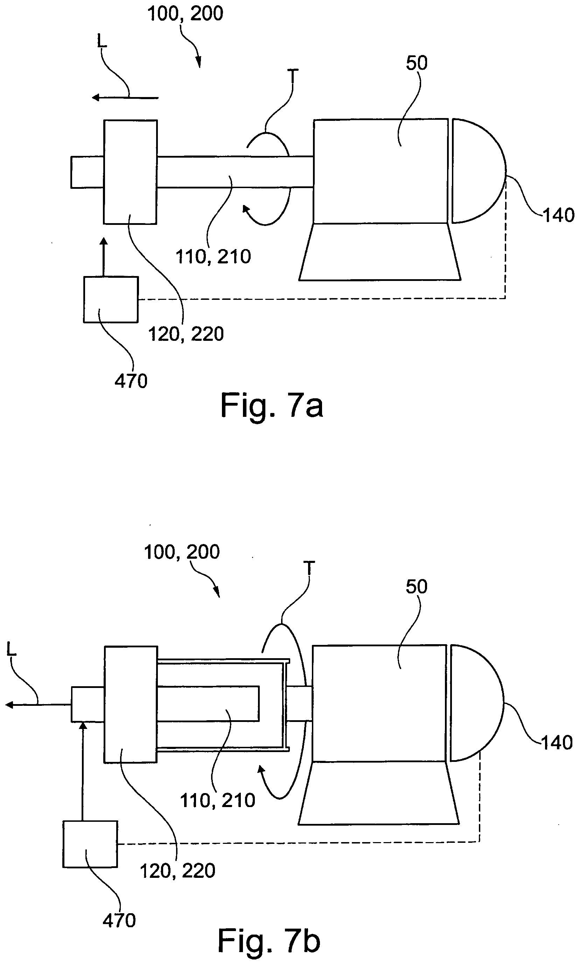

Figs. 7a, b show further embodiments of the linear actuator systems 100, 200. Fig. 7a again relates to the embodiment as shown in Fig. 4 and Fig. 7b relates to embodiment as shown in Fig. 5.

In both embodiments the linear actuator systems 100, 200 comprise an optional sensor 470, which is configured to detect an axial or longitudinal position of the tubular ring 110, 210 in comparison, for example, to the electric motor 50 or a housing (not shown in Fig. 7). The sensor 470 may further be configured to detect the longitudinal force L exerted by the tubular ring 110, 210. Such force detection may enable the control unit 140 to adapt the operation of the electric motor 50 or the optional gear unit 460 in accordance to the needs. For example, the provided longitudinal force L can be adjusted to actuate the exemplary braking system or the clutch in a desired way.

Moreover, in the embodiments shown in Figs. 7a, b the control unit 140 is directly connected to the electric motor 50 and is configured to receive a sensor signal from the sensor 470 and to adjust the torque T and/or rotational speed provided by the electric motor 50 in response to the sensor signal received from the sensor unit 470. Therefore, the linear actuators according to Figs. 7a, b are able to adjust dynamically the needed linear force L as demanded for example by an operational state of the vehicle or by a driver.

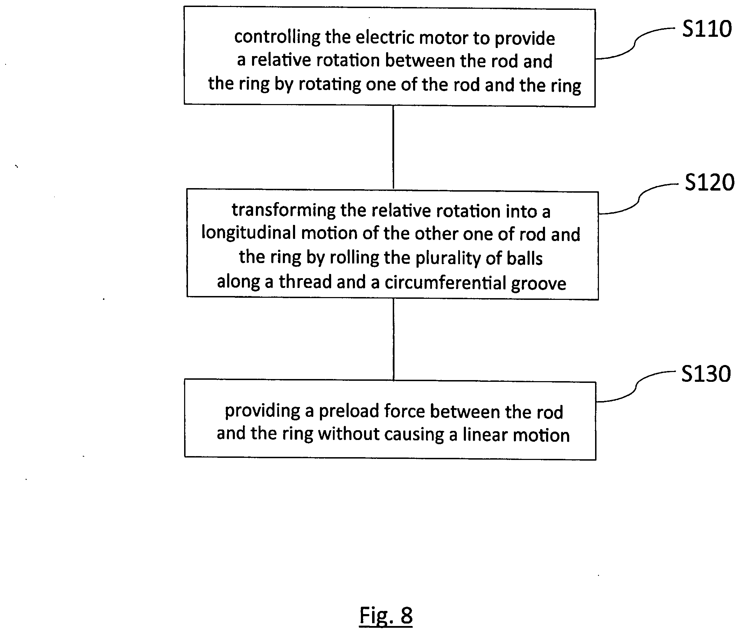

Fig. 8 shows a flow diagram of a method according to an embodiment of the present invention for controlling a linear actuator, the linear actuator being coupled to an electric motor and comprising a rod, a tubular ring and a plurality of balls. The method comprises: controlling S110 the electric motor to provide a relative rotation between the rod and the ring by rotating one of the rod and the ring; transforming S120 the relative rotation into a longitudinal motion of the other one of rod and the ring by rolling the plurality of balls along a thread and a circumferential groove, one of which provided on the rod, the other one provided at the ring. The method further comprises providing S130 a preload force between the rod and the ring without causing a linear motion.

This method may partly be computer-implemented and a person of skill in the art would readily recognize that steps of various above-described functions may be performed by programmed computers.

According to the present invention, this method may be implemented by a linear actuator system 100, 200 for providing a linear actuator force transferred from an electric motor 50. This system 100, 200 comprises a plurality of threads 111, 221 and at least one circumferential groove. This system 100, 200 further comprises a rod 110, 210 and a tubular ring 120, 220, one of which comprises the plurality of threads and the other one comprises the at least one circumferential groove such that the plurality of threads face the at least one circumferential groove. The tubular ring 120, 220 and the rod 110, 210 are configured to perform a relative rotation relative to each other, wherein one of the tubular ring 120, 220 and the rod 110, 210 is configured to couple to the electric motor 50 such that the electric motor 50 is able to drive the relative rotation. The system 100, 200 further comprises a plurality of balls 130, 230 arranged between the tubular ring 120, 220 and the rod 110, 210 to roll along the circumferential groove 121, 211 and the threads 121, 221 to move the other one of the tubular ring 120, 220 and the rod 110, 120 in a longitudinally direction in response to the relative rotation. The system 100, 200 further comprises a control unit 140 configured to control the electric motor 50 to provide a constant preload force T acting between the rod 110, 210 and the tubular ring 120, 220 without moving the other one of the ring 120, 220 and the rod 110, 210 in the longitudinally direction.

Advantageous aspects of the various embodiments can be summarized as follows:
Linear actuators 100, 200 as disclosed herein are widely used in vehicle systems to move mechanical elements against a load of elastic elements, as for example a spring or any elastic element like an engine clutch diaphragm or a returning spring of a fluid flow control valve. As for of wheel brakes, it may be a caliper itself, which represents the elastic element and generates the force load. In general, operations, which are actuated by fluid based actuators, are applications where a unidirectional load is provided. For this case further simplifications are possible, since the contact of the elements, to which the load is transferred, is constant and effects (like a backlash) are not part of the operation. In this way, the mechanism, which acts linearly against the load, does not need a change in the mechanical contact points along the actuation axle and does not need a backlash elimination function. Hence, the inclusion of pretension elements in the gear component can be eliminated, while the continuous load on the transmission is securely provided.

One possible embodiment of a mechanical gear, which is sufficient to transfer the rotational movement to a linear movement in the actuator, has a continuous load on the transmission as shown in Fig. 3. The screw element (the rod 110) comprises outer helical grooves with multiple starts in order to have multiple placing points around its axle in the same surface perpendicular to its axle. In accordance to the number of thread starts the same number of balls 130 can be placed in the same perpendicular surface into the threads and further connected to the circumferentially grooved ring 120 in the cross-sectional surface. Thee angular displacement of the balls 120 can further be maintained by a ball supporting cage 140. The operation of the mechanism is ensured by the friction between the balls 130 and the ring 110, which is generated by the load which is assumed to exist continuously on the mechanism.

Furthermore, many applications need a high dynamic operation in that the mass forces are working against the static load of the transmission. To ensure the continuous load at such conditions, an appropriate control of the load is needed, which may not be fulfilled by passive elements only. However, a control of an electric motor 50 is sufficiently fast and accurate to maintain the continuous load on the mechanism. This means, that the operation of the mechanism by an electric motor is a solution to the gear operation at any condition.

The other figures explain further details and optional components, which can be integrated. For example, Fig. 4 showed the integration of the electric motor 50, where the screw element is rotated by the motor 50, while the linear movement is generated by the ring element 120 guided in the way that a rotation of the ring element 120 is locked (the ring element is rotationally fixed, e.g. to a housing). Fig. 5 further showed the integration of the electric motor 50, wherein the ring 120 is rotated by the motor 50, but the linear movement is generated by the screw element 110 guided in a way that rotation of the screw element 110 is locked. Fig. 6 showed the actuator component structure, wherein the rotational power of the electric motor 50 is transferred by a shape locking gear arrangement 460 to the rotated element of the screw-ball mechanism which can be either the screw element 110 or the ring element 120. Fig. 7 showed an optional position and/or force sensor 470 which may be placed on the linearly moving element and connected to the actuator control 480.

The present invention provides a solution for enabling a simple realization of the screw-ball mechanism for unidirectionally loaded linear actuator gears which provides the required initial friction via the integration of an electric motor which can generated the pretension together with the load.

The description and drawings merely illustrate the principles of the invention. It will thus be appreciated that those skilled in the art will be able to devise various arrangements that, although not explicitly described or shown herein, embody the principles of the invention which is covered by the appended claims.

Furthermore, while each embodiment may stand on its own as a separate example, it is to be noted that in other embodiments the defined features can be combined differently, i.e. a particular feature descripted in one embodiment may also be realized in other embodiments.

### List of reference signs

- 50: electric motor
- 100, 200: linear actuator system
- 111, 221: plurality of threads
- 121, 211: circumferential groove
- 110,210: rod
- 120,220: tubular ring
- 126: cylindrical portion
- 130, 131, ...: plurality of balls
- 140: control units
- 300: cage
- 460: gear unit
- 470: sensor
- P: contacting points
- T: torque
- L: longitudinal force

## Claims

1. A linear actuator system (100) of a vehicle with an electric motor (50), a clutch or a vehicle brake system, the linear actuator system (100) being able to provide a linear actuator force transferred from an electric motor (50) for actuating the vehicle brake or the clutch, the system (100) comprising:
a rod (110) with threads (111);
**characterized by**
a ring (120) with at least one circumferential groove (121) facing the threads (111) of the rod (110), the ring (120) and the rod (110) being configured to perform a relative rotation to each other, wherein one of the ring (120) and the rod (110) is configured to couple to the electric motor (50) such that the electric motor (50) is able to drive the relative rotation;
a plurality of balls (130) arranged between the ring (120) and the rod (110) to roll along the circumferential groove (121) and the threads (111) to move the other one of the ring (120) and the rod (110) in a longitudinally direction in response to the relative rotation;
a control unit (140) configured to control the electric motor (50) to provide a constant preload torque (T) acting between the rod (110) and the ring (120) without moving the other one of the ring (120) and the rod (110) in the longitudinally direction; and
a gear unit (460), which is configured to couple to the electric motor (50) and to provide a gearing for a torque (T1) provided by the electric motor (50).

2. A linear actuator system (200) of a vehicle with an electric motor (50), a clutch or a vehicle brake system, the linear actuator system (200) being able to provide a linear actuator force transferred from an electric motor (50) for actuating the vehicle brake or the clutch, the system (200) comprising:
a rod (210) with at least one circumferential groove (211);
**characterized by**
a cylindrical tube (220) with threads (221) facing the at least one circumferential groove (211) of the rod (210), the cylindrical tube (220) and the rod (210) being configured to perform a relative rotation to each other, wherein one of the cylindrical tube (220) and the rod (210) is configured to couple to the electric motor (50) such that the electric motor (50) is able to drive the relative rotation;
a plurality of balls (230) arranged between the cylindrical tube (220) and the rod (210) to roll along the circumferential groove (211) and the threads (221) to move the other one of the cylindrical tube (220) and the rod (210) in a longitudinally direction in response to the relative rotation;
a control unit (140) configured to control the electric motor (50) to provide a constant preload torque (T) acting between the rod (210) and the cylindrical tube (220) without moving the other one of the cylindrical tube (220) and the rod (210) in the longitudinally direction; and
a gear unit (460), which is configured to couple to the electric motor (50) and to provide a gearing for a torque (T1) provided by the electric motor (50).

3. The linear actuator system (100, 200) of claim 1 or claim 2, wherein the at least one circumferential groove (121, 211) comprises a first circumferential groove and a second circumferential groove, wherein the plurality of balls (130, 230) comprises a first plurality of balls engaged with a first circumferential groove and a second plurality of balls engaged with a second groove, the first circumferential groove being longitudinally displaced with respect to the second circumferential groove.

4. The linear actuator system (100, 200) according to one of the proceeding claims, further comprising a cage (300) arranged between the rod (110) and the ring (120), or arranged between the rod (210) and the cylindrical tube (220), the cage (300) comprising openings configured to receive the pluralities of balls (130, 230) and to hold the plurality of balls (130, 230) at predetermined angular distances.

5. The linear actuator system (100, 200) according to one of the proceeding claims, wherein each thread of the threads (111, 221) accommodates one ball for each circumferential groove (121, 211).

6. The linear actuator system (100, 200) according to one of the preceding claims, wherein the gear unit (460) comprises at least one of the following: a spur gear, a helical gear, a planetary gear, a cycloid gear, harmonic drive gear, teeth-belt or chain gear wheel or any combination thereof.

7. The linear actuator system (100, 200) according to one of the proceeding claims, wherein the rotational torque (T) of the electric motor (50) is directly provided to the rod (110, 210) or to the ring (120) or to the cylindrical tube (220).

8. The linear actuator system (100, 200) according to one of the proceeding claims, further comprising a coupling element configured to supply the linear motion to a clutch of a vehicle drive line or a vehicle brake system or to a control valve of the vehicle for controlling a fluid flow.

9. The linear actuator system (100, 200) according to one of the proceeding claims, further comprising a sensor (470) being configured to measure the longitudinal motion of the ring (120), cylindrical tube (220) or the rod (110, 210), the sensor (470) being configured to provide a sensor signal indicative of the longitudinal position or the longitudinal force provided by the ring (120), the cylindrical tube (220) or the rod (110, 210), and to provide the sensor signal to the control unit (140), the control unit (140) being configured to adjust the a control of the electric motor (50) based on the control signal.

10. A vehicle comprising:
an electric motor (50) configured to provide a torque (T) in an idle state;
a linear actuator system (100, 200) according to one of the proceeding claims; and
a clutch being coupled to the linear actuator system (100, 200) and being driven by a linear actuation force provided by the linear actuator system (100, 200).

11. A vehicle comprising:
an electric motor (50) configured to provide a torque (T) in an idle state;
a vehicle brake system; and
a linear actuator system (100, 200) according to one of the claims 1 to 9, which is coupled to the vehicle brake system to provide an actuation to the vehicle brake.

12. Method for controlling a linear actuator (100, 200) of a vehicle with an electric motor (50), a clutch or a vehicle brake system, the linear actuator (100, 200) being coupled to an electric motor (50) to actuate the vehicle brake or the clutch and comprising a rod (110, 210), a tubular ring (120, 220) and a plurality of balls (130, 230), the method comprising:
controlling (S110) the electric motor (50) to provide a relative rotation between the rod (110, 210) and the tubular ring (120, 220) by rotating one of the rod (110, 210) and the tubular ring (120, 220);
transforming (S120) the relative rotation into a longitudinal motion of the other one of rod (110, 210) and the tubular ring (120, 220) by rolling the plurality of balls (130, 230) along a thread (111, 221) and a circumferential groove (121, 211), one of which provided on the rod (110, 210), the other one provided at the tubular ring (120, 220);
providing (S130) a preload force between the rod (110, 210) and the tubular ring (120, 220) without causing a linear motion; and
providing a gearing for a torque (T1) provided by the electric motor (50) by a gear unit (460) coupled to the electric motor (50).

## Patentansprüche

1. Linearaktuatorsystem (100) für ein Fahrzeug mit einem Elektromotor (50), einer Kupplung oder einem Fahrzeugbremssystem, wobei das Linearaktuatorsystem (100) eine von einem Elektromotor (50) übertragene Linearaktuatorkraft zum Betätigen der Fahrzeugbremse oder der Kupplung bereitstellen kann, wobei das System (100) Folgendes umfasst:
eine Stange (110) mit einem Gewinde (111);
**gekennzeichnet durch**
einen Ring (120) mit mindestens einer Umfangsnut (121), die dem Gewinde (111) der Stange (110) zugekehrt ist, wobei der Ring (120) und die Stange (110) dazu ausgeführt sind, eine relative Drehung bezüglich einander durchzuführen, wobei eines von dem Ring (120) und der Stange (110) dazu ausgeführt ist, so mit dem Elektromotor (50) zu koppeln, dass der Elektromotor (50) die relative Drehung antreiben kann;
mehrere Kugeln (130), die zwischen dem Ring (120) und der Stange (110) angeordnet sind, um entlang der Umfangsnut (121) und dem Gewinde (111) zu rollen und so den anderen von dem Ring (120) und der Stange (110) als Reaktion auf die relative Drehung in einer Längsrichtung zu bewegen;
eine Steuereinheit (140), die dazu ausgeführt ist, den Elektromotor (50) dahingehend zu steuern, ein konstantes Vorspannmoment (T) bereitzustellen, das zwischen der Stange (110) und dem Ring (120) wirkt, ohne den anderen von dem Ring (120) und der Stange (110) in der Längsrichtung zu bewegen; und
eine Getriebeeinheit (460), die zur Kopplung mit dem Elektromotor (50) und zur Bereitstellung einer Getriebeübersetzung für ein durch den Elektromotor (50) bereitgestelltes Drehmoment (T1) ausgeführt ist.

2. Linearaktuatorsystem (200) für ein Fahrzeug mit einem Elektromotor (50), einer Kupplung oder einem Fahrzeugbremssystem, wobei das Linearaktuatorsystem (200) eine von einem Elektromotor (50) übertragene Linearaktuatorkraft zum Betätigen der Fahrzeugbremse oder der Kupplung bereitstellen kann, wobei das System (200) Folgendes umfasst:
eine Stange (110) mit mindestens einer Umfangsnut (211) ;
**gekennzeichnet durch**
ein zylindrisches Rohr (220) mit einem Gewinde (221), das der mindestens einen Umfangsnut (211) der Stange (210) zugekehrt ist, wobei das zylindrische Rohr (220) und die Stange (210) dazu ausgeführt sind, eine relative Drehung bezüglich einander durchzuführen, wobei eines von dem zylindrischen Rohr (220) und der Stange (210) dazu ausgeführt ist, so mit dem Elektromotor (50) zu koppeln, dass der Elektromotor (50) die relative Drehung antreiben kann;
mehrere Kugeln (230), die zwischen dem zylindrischen Rohr (220) und der Stange (210) angeordnet sind, um entlang der Umfangsnut (211) und dem Gewinde (221) zu rollen und so den anderen von dem zylindrischen Rohr (220) und der Stange (210) als Reaktion auf die relative Drehung in einer Längsrichtung zu bewegen;
eine Steuereinheit (140), die dazu ausgeführt ist, den Elektromotor (50) dahingehend zu steuern, ein konstantes Vorspannmoment (T) bereitzustellen, das zwischen der Stange (210) und dem zylindrischen Rohr (220) wirkt, ohne den anderen von dem zylindrischen Rohr (220) und der Stange (210) in der Längsrichtung zu bewegen; und
eine Getriebeeinheit (460), die zur Kopplung mit dem Elektromotor (50) und zur Bereitstellung einer Getriebeübersetzung für ein durch den Elektromotor (50) bereitgestelltes Drehmoment (T1) ausgeführt ist.

3. Linearaktuatorsystem (100, 200) nach Anspruch 1 oder Anspruch 2, wobei die mindestens eine Umfangsnut (121, 211) eine erste Umfangsnut und eine zweite Umfangsnut umfasst, wobei die mehreren Kugeln (130, 230) mehrere erste Kugeln, die mit einer ersten Umfangsnut in Eingriff stehen, und mehrere zweite Kugeln, die mit einer zweiten Nut in Eingriff stehen, umfassen, wobei die erste Umfangsnut bezüglich der zweiten Umfangsnut in Längsrichtung versetzt ist.

4. Linearaktuatorsystem (100, 200) nach einem der vorhergehenden Ansprüche, ferner umfassend einen Käfig (300), der zwischen der Stange (110) und dem Ring (120) oder zwischen der Stange (210) und dem zylindrischen Rohr (220) angeordnet ist, wobei der Käfig (300) Öffnungen umfasst, die dazu ausgeführt sind, die mehreren Kugeln (130, 230) aufzunehmen und die mehreren Kugeln (130, 230) in vorbestimmten Winkelabständen zu halten.

5. Linearaktuatorsystem (100, 200) nach einem der vorhergehenden Ansprüche, wobei jeder Gewindegang des Gewindes (111, 221) eine Kugel für jede Umfangsnut (121, 211) aufnimmt.

6. Linearaktuatorsystem (100, 200) nach einem der vorhergehenden Ansprüche, wobei die Getriebeeinheit (460) mindestens eines der Folgenden umfasst: ein Stirnradgetriebe, ein Schrägverzahnungsgetriebe, ein Planetengetriebe, ein Zykloidengetriebe, ein Harmonic-Drive-Getriebe, ein Zahnriemen- oder Kettenzahnrad oder eine beliebige Kombination daraus.

7. Linearaktuatorsystem (100, 200) nach einem der vorhergehenden Ansprüche, wobei das Drehmoment (T) des Elektromotors (50) der Stange (110, 210) oder dem Ring (120) oder dem zylindrischen Rohr (220) direkt zugeführt wird.

8. Linearaktuatorsystem (100, 200) nach einem der vorhergehenden Ansprüche, ferner umfassend ein Kopplungselement, das dazu ausgeführt ist, die Linearbewegung einer Kupplung eines Fahrzeugantriebsstrangs oder einem Fahrzeugbremssystem oder einem Steuerventil des Fahrzeugs zum Steuern von Fluidstrom zuzuführen.

9. Linearaktuatorsystem (100, 200) nach einem der vorhergehenden Ansprüche, ferner umfassend einen Sensor (470), der dazu ausgeführt ist, die Längsbewegung des Rings (120), des zylindrischen Rohrs (220) oder der Stange (110, 210) zu messen, wobei der Sensor (470) dazu ausgeführt ist, ein Sensorsignal bereitzustellen, das die durch den Ring (120), das zylindrische Rohr (220) oder die Stange (110, 210) bereitgestellte Längsposition oder Längskraft anzeigt, und das Sensorsignal der Steuereinheit (140) zuzuführen, wobei die Steuereinheit (140) dazu konfiguriert ist, die Steuerung des Elektromotors (50) basierend auf dem Sensorsignal einzustellen.

10. Fahrzeug, umfassend:
einen Elektromotor (50), der zum Bereitstellen eines Drehmoments (T) in einem Leerlaufzustand ausgeführt ist;
ein Linearaktuatorsystem (100, 200) nach einem der vorhergehenden Ansprüche; und
eine Kupplung, die mit dem Linearaktuatorsystem (100, 200) gekoppelt ist und die durch eine durch das Linearaktuatorsystem (100, 200) bereitgestellte Linearbetätigungskraft angetrieben wird.

11. Fahrzeug, umfassend:
einen Elektromotor (50), der zum Bereitstellen eines Drehmoments (T) in einem Leerlaufzustand ausgeführt ist;
ein Fahrzeugbremssystem; und
ein Linearaktuatorsystem (100, 200) nach einem der Ansprüche 1 bis 9, das mit dem Fahrzeugbremssystem gekoppelt ist, um eine Betätigung für die Fahrzeugbremse bereitzustellen.

12. Verfahren zum Steuern eines Linearaktuators (100, 200) eines Fahrzeugs mit einem Elektromotor (50), einer Kupplung oder einem Fahrzeugbremssystem, wobei der Linearaktuator (100, 200) mit einem Elektromotor (50) gekoppelt ist, um die Fahrzeugbremse oder die Kupplung zu betätigen, und eine Stange (110, 210), einen röhrenförmigen Ring (120, 220) und mehrere Kugeln (130, 230) umfasst, wobei das Verfahren Folgendes umfasst:
Steuern (S110) des Elektromotors (50) zum Bereitstellen einer relativen Drehung zwischen der Stange (110, 210) und dem röhrenförmigen Ring (120, 220) durch Drehen eines von der Stange (110, 210) und dem röhrenförmigen Ring (120, 220);
Umwandeln (S120) der relativen Drehung in eine Längsbewegung des anderen von der Stange (110, 210) und dem röhrenförmigen Ring (120, 220) durch Rollen der mehreren Kugeln (130, 230) entlang einem Gewinde (111, 221) und einer Umfangsnut (121, 211), wobei eines davon an der Stange (110, 210) und das andere an dem röhrenförmigen Ring (120, 220) vorgesehen ist;
Bereitstellen (S130) einer Vorspannkraft zwischen der Stange (110, 210) und dem röhrenförmigen Ring (120, 220) ohne Bewirken einer linearen Bewegung; und
Bereitstellen einer Getriebeübersetzung für ein durch den Elektromotor (50) bereitgestelltes Drehmoment (T1) durch eine mit dem Elektromotor (50) gekoppelte Getriebeeinheit (460).

## Revendications

1. Système (100) d'actionneur linéaire d'un véhicule ayant un moteur (50) électrique, un embrayage ou un système de frein de véhicule, le système (100) d'actionneur linéaire étant apte à fournir une force d'actionneur linéaire transférée d'un moteur (50) électrique pour actionner le frein du véhicule pour l'embrayage, le système (100) comprenant :
une barre (110) ayant des filets (111) ;
**caractérisé par**
un anneau (120) ayant au moins une rainure (121) circonférentielle faisant face aux filets (111) de la barre (110), l'anneau (120) et la barre (110) étant configurés pour effectuer une rotation relative l'un par rapport à l'autre, dans lequel l'un de l'anneau (120) et de la barre (110) est configuré pour s'accoupler au moteur (50) électrique de manière à ce que le moteur (50) électrique soit apte à donner la rotation relative ;
une pluralité (130) de billes disposées entre l'anneau (120) et la barre (110) pour rouler sur la rainure (121) circonférentielle et les filets (111) pour déplacer l'autre de l'anneau (120) et de la barre (110) dans une direction longitudinale en réaction à la rotation relative ;
une unité (140) de commande configurée pour commander le moteur (50) électrique, pour fournir un couple (T) constant de précharge s'appliquant entre la barre (110) et l'anneau (120) sans déplacer l'autre de l'anneau (120) et de la barre (110) dans la direction longitudinale ; et
une unité (460) d'engrenage, qui est configurée pour s'engrener au moteur (50) électrique et pour fournir un engrenage pour un couple (T1) donné par le moteur (50) électrique.

2. Système (200) d'actionneur linéaire d'un véhicule ayant un moteur (50) électrique, un embrayage ou un système de frein de véhicule, le système (200) d'actionneur linéaire étant apte à donner une force d'actionneur linéaire transférée à partir d'un moteur (50) électrique pour actionner le frein du véhicule ou l'embrayage, le système (200) comprenant :
une barre (210) ayant au moins une rainure (211) circonférentielle ;
**caractérisé par**
un tube (220) cylindrique ayant des filets (221) faisant face à la au moins une rainure (211) circonférentielle de la barre (210), le tube (220) cylindrique et la barre (220) étant configurés pour effectuer une rotation relative l'un par rapport à l'autre, dans lequel l'un du tube (220) cylindrique et de la barre (210) est configuré pour s'accoupler au moteur (50) électrique de manière à ce que le moteur (50) électrique soit apte à donner la rotation relative ;
une pluralité de billes (230) disposées entre le tube (220) cylindrique et la barre (210) pour rouler sur la rainure (211) circonférentielle et les filets (221) afin de déplacer l'autre du tube (220) cylindrique et de la barre (210) dans une direction longitudinale en réaction à la rotation relative ;
une unité (140) de commande configurée pour commander le moteur (50) électrique pour fournir un couple (T) constant de précharge s'appliquant entre la barre (210) et le tube (220) cylindrique sans déplacer l'autre du tube (220) cylindrique et de la barre (210) dans la direction longitudinale ; et
une unité (460) d'engrenage, qui est configurée pour s'engrener au moteur (50) électrique et pour fournir un engrenage pour un couple (T1) donné par le moteur (50) électrique.

3. Système (100, 200) d'actionneur linéaire suivant la revendication 1 ou la revendication 2, dans lequel la au moins une rainure (121, 211) circonférentielle comprend une première rainure circonférentielle et une deuxième rainure circonférentielle, dans lequel la pluralité de billes (130, 230) comprend une première pluralité de billes engagées dans la première rainure circonférentielle et une deuxième pluralité de billes engagées dans la deuxième rainure, la première rainure circonférentielle étant décalée longitudinalement par rapport à la deuxième rainure circonférentielle.

4. Système (100, 200) d'actionneur linéaire suivant l'une des revendications précédentes, comprenant en outre une cage (300) disposée entre la barre (110) et l'anneau (120), ou disposée entre la barre (210) et le tube (220) cylindrique, la cage (300) comprenant des ouvertures configurées pour recevoir la pluralité de billes (130, 230) et pour maintenir la pluralité de billes (130, 230) à des distances angulaires déterminées à l'avance.

5. Système (100, 200) d'actionneur linéaire suivant l'une des revendications précédentes, dans lequel chaque filet des filets (111, 221) loge une bille pour chaque rainure (121, 211) circonférentielle.

6. Système (100, 200) d'actionneur linéaire suivant l'une des revendications précédentes, dans lequel l'unité (460) d'engrenage comprend au moins l'un de ce qui suit : un engrenage cylindrique, un engrenage hélicoïdal, un engrenage planétaire, un engrenage épicycloïdal, un engrenage d'entraînement harmonique, une courroie à dents ou une roue dentée à chaîne ou leurs combinaisons.

7. Système (100, 200) d'actionneur linéaire suivant l'une quelconque des revendications précédentes, dans lequel le couple (T) de rotation du moteur (50) électrique est appliqué directement à la barre (110, 210) ou à l'anneau (120) ou au tube (220) cylindrique.

8. Système (100, 200) d'actionneur linéaire suivant l'une des revendications précédentes, comprenant en outre un élément d'accouplement configuré pour donner le mouvement linéaire à un embrayage d'une transmission d'un véhicule ou d'un système de frein d'un véhicule ou à une soupape de commande du véhicule pour commander un écoulement de fluide.

9. Système (100, 200) d'actionneur linéaire suivant l'une des revendications précédentes, comprenant en outre un capteur (470) configuré pour mesurer le déplacement longitudinal de l'anneau (120), du tube (220) cylindrique ou de la barre (110, 210), le capteur (470) étant configuré pour fournir un signal de capteur indiquant la position longitudinale de la force longitudinale donnée par l'anneau (120), le tube (220) cylindrique ou la barre (110, 210) et pour fournir le signal de capteur à l'unité (140) de commande, l'unité (140) de commande étant configurée pour régler une commande du moteur (50) électrique sur la base du signal de commande.

10. Véhicule comprenant :
un moteur (50) électrique configuré pour donner un couple (T) dans un état de ralenti ;
un système (100, 200) d'actionneur linéaire suivant l'une des revendications précédentes ; et
un embrayage étant accouplé au système (100, 200) d'actionneur linéaire et étant entraîné par une force d'actionnement linéaire donnée par le système (100, 200) d'actionneur linéaire.

11. Véhicule comprenant :
un moteur (50) électrique configuré pour donner un couple (T) dans un état de ralenti ;
un système de frein du véhicule ; et
un système (100, 200) d'actionneur linéaire suivant l'une des revendications 1 à 9 qui est accouplé au système de frein du véhicule pour fournir un actionnement au frein du véhicule.

12. Procédé de commande d'un actionneur (100, 200) linéaire d'un véhicule ayant un moteur (50) électrique, un embrayage ou un système de frein de véhicule, l'actionneur (100, 200) linéaire étant accouplé à un moteur (50) électrique pour actionner le frein de véhicule ou l'embrayage et comprenant une barre (110, 210), un anneau (120, 220) tubulaire et une pluralité de billes (130, 230), procédé dans lequel :
on commande (S110) le moteur (50) électrique pour donner une rotation relative entre la barre (110, 210) et l'anneau (120, 220) tubulaire en faisant tourner l'un de la barre (110, 210) et de l'anneau (120, 220) tubulaire ;
on transforme (S120) la rotation relative en un mouvement longitudinal de l'autre de la barre (110, 210) et de l'anneau (120, 220) tubulaire en faisant rouler la pluralité de billes (130, 230) le long d'un filet (111, 221) et d'une rainure (121, 211) circonférentielle, dont l'un est prévu sur la barre (110, 210), tandis que l'autre est prévu à l'anneau (120, 220) tubulaire ;
on applique (S130) une force de précharge entre la barre (110, 210) et l'anneau (120, 220) tubulaire sans provoquer un déplacement linéaire ; et
on prévoit un engrenage pour un couple (T1) donné par le moteur (50) électrique par une unité (460) d'engrenage engrenée avec le moteur (50) électrique.
